# EUROPEAN PATENT SPECIFICATION

(11) **EP 0 653 802 B1**
(45) Date of publication and mention of the grant of the patent: **07.10.1998**
(21) Application number: 94308367.5
(22) Date of filing: 14.11.1994
(51) Int. Cl.: H01R 4/18

(54) **Electrical cable connector**
Verbindungsklemme für elektrische Kabel
Connecteur pour câble électrique

(30) Priority: 16.11.1993 BR 7302209 U; 22.11.1993 BR 7302224 U
(43) Date of publication of application: 17.05.1995
(73) Proprietor: THE WHITAKER CORPORATION, Wilmington, Delaware 19808 (US)
(72) Inventor: Diniz, Milton Egas, Braganca Paulista, SP, Cep 12900-000 (BR); Soriano, Alexandre Martinez, Pedra Bela, SP, Cep 129100-000 (BR)
(74) Representative: Warren, Keith Stanley

(56) References cited:
- DE-A- 1 490 754
- FR-A- 1 105 730
- US-A- 3 588 791
- US-A- 3 897 992
- US-A- 4 650 273
- US-A- 5 006 081

## Description

The present invention relates to a wedge type connector for conductor cables of electrical distribution networks, suitable for housing conductor cables of different sizes, which are placed and secured between a first, generally C-shaped outer member having teeth and a second wedge type inner member.

An example of a known connector is shown in Brazilian Patent Application PI 9102719, wherein teeth are provided to penetrate through the cables, thus increasing the tensile value of the conductor cables of the connection.

A further known connector is disclosed in Brazilian Patent Application PI 9202511, which is a connector provided with bumpers and a latch to prevent shifting of the constituent parts of the connector.

US-A-4 650 273 discloses an electrical connector having a generally C-shaped member for electrically connecting wires with a wedge member. The C-shaped member comprises recesses which are arranged on the bights of the C-shaped member.

The present invention consists in an electrical connector for interconnecting conductor cables, in which the cables are secured between bights of a generally C-shaped receptacle and an inner wedge member, characterised by strengthening recesses extending about the inner peripheries of the bights of the C-shaped receptacle and forming inwardly directed channels and outwardly directed protuberances, and holding teeth disposed on the inner peripheries of the bights between the recesses.

Increased tensile value for retention of the wires is thereby provided.

An embodiment of the present invention will now be described by way of example with reference to the accompanying drawings, in which:

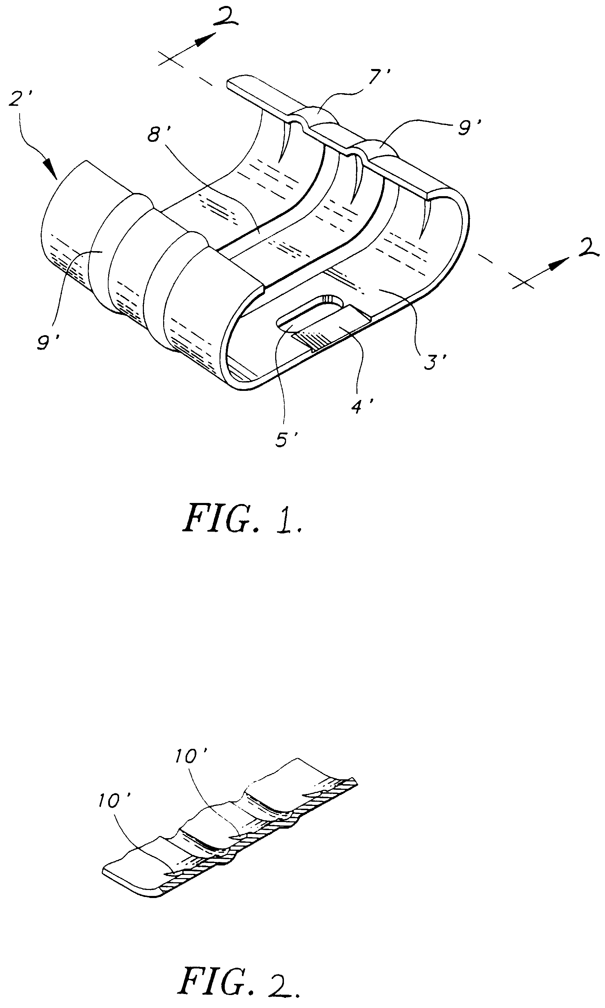

Figure 1 is a perspective view showing the C-shaped member of a connector, according to an embodiment of the invention,
Figure 2 is a perspective view showing a sectioned portion of the C-shaped member taken along line 2-2 of Figure 1,

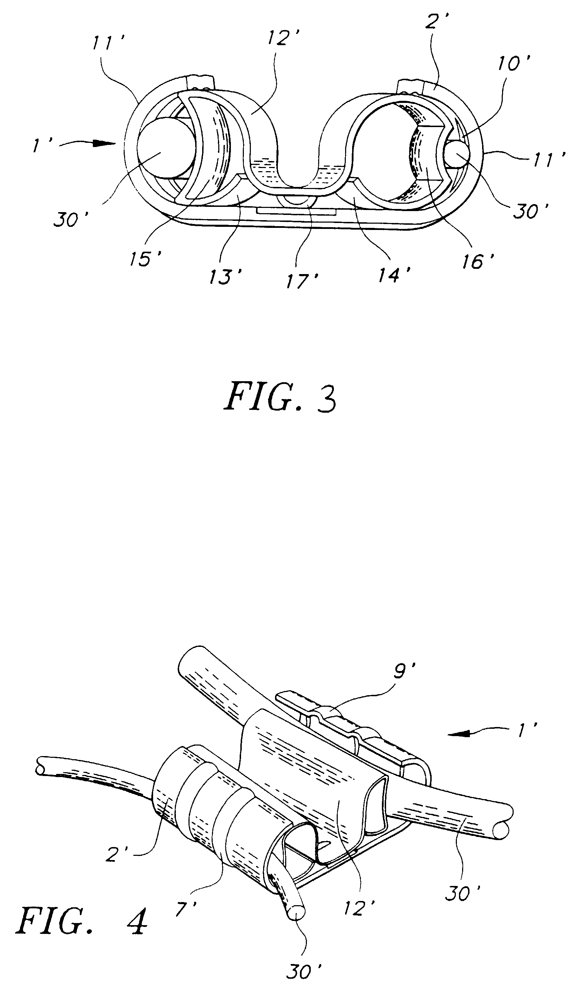

Figure 3 is a frontal perspective view showing the connector in an assembled state.
Figure 4 is a perspective view of the assembled connector, showing cables arranged in the connector assembly.

As shown in the Figures, connector 1' comprises two pieces which fit together to secure conductor cables 30' between them. One of the pieces is a member 2' of generally C-form which is stamped and formed from a sheet, usually from sheet metal, which is bent in the shape of a "C". In the bottom portion 3' is provided a ramp 4' adjacent to an opening 5'.

Receptacle 2' has at least two radially arranged recesses 7' forming inwardly directed channels 8' and outwardly directed protuberances 9'.

The inner portion of receptacle 2' is provided with a plurality of holding teeth 10' which are longitudinally spaced apart along the length of the receptacle 2'.

The holding teeth 10' are provided in the inner side wall 11' of receptacle 2', in the bight or concave portion of the same, and are preferably in the shape of notches, which shape is suitable to increase the tensile strength of the cables in the connector. In the embodiment of the present invention, the notches have a diamond shape. It should be noted that the diamond shape is an illustrative shape and not a restrictive one.

Teeth 10' can be arranged in a way to be inserted between the two recesses 7' in order to provide a greater tensile strength to the receptacle 2' to better distribute the tension of the connection along the cables and to permit an increase of the tensile value of the cables in the connector assembly.

The other piece of the connector assembly 1' is a wedge shaped member 12' comprised of a sheet material, preferably of sheet metal which is folded inwardly forming two cylindrical portions 13' and 14', having channels 15' and 16', respectively, which will secure and tense up cables 30' against the wall 11' of receptacle 2'.

Usually, the receptacle 2 of the connector 1' is placed about cables 30' and the wedge member 12' is inserted into the receptacle to secure cables 30'. The wedge member 12' is provided with a locking nub 17' which slides on the ramp 4' fitting in opening 5', thus preventing the unlocking of the wedge member 12' from receptacle 2'.

## Claims

1. An electrical connector (1') for interconnecting conductor cables (30'), in which the cables are secured between bights of a generally C-shaped receptacle (2') and an inner wedge member (12'), characterised by strengthening recesses (7') extending about the inner peripheries of the bights of the C-shaped receptacle (2') and forming inwardly directed channels (8') and outwardly directed protuberances (9'), and holding teeth (10') disposed on the inner peripheries of the bights between the recesses (7').

2. The electrical connector of claim 1, wherein the recesses (7') generally extend completely across the C-shaped receptacle (2')

3. The electrical connector of claim 1 or 2, wherein the C-shaped receptacle (2') is made of stamped and formed sheet metal.

4. The electrical connector of any preceding claim, wherein the wedge member (12') has a locking nub (17') which fits into a cooperating opening (5') in the C-shaped receptacle upon assembly therewith to prevent unlocking of the wedge member from the receptacle.

## Patentansprüche

1. Elektrische Verbindungshülse (1'), um Leiterkabel (30') miteinander zu verbinden, wobei die Kabel zwischen Ausbuchtungen einer allgemein C-förmigen Aufnahme (2') und einem inneren Keilglied (12') befestigt sind, gekennzeichnet durch Verstärkungsausnehmungen (7'), die sich um die Innenumfänge der Buchten der C-förmigen Aufnahme (2') erstrecken und nach innen gerichtete Kanäle (8') und nach außen gerichtete Ausstülpungen (9') aufweisen und durch Haltezähne (10'), die an den Innenumfängen der Buchten zwischen den Ausnehmungen (7') angeordnet sind.

2. Elektrische Verbindungshülse nach Anspruch 1, bei der sich die Ausnehmungen (7') allgemein vollständig über die C-förmige Aufnahme (2') erstrecken.

3. Elektrische Verbindungshülse nach Anspruch 1 oder 2, bei der die C-förmige Aufnahme (2') aus gestanztem und geformtem Blech hergestellt ist.

4. Elektrische Verbindungshülse nach einem der vorhergehenden Ansprüche, bei der das Keilglied (12') eine Verriegelungsnoppe (17') aufweist, die in eine zusammenwirkende Öffnung (5') in der C-förmigen Aufnahme bei Zusammenbau damit paßt, um ein Entriegeln des Keilglieds von der Aufnahme zu verhindern.

## Revendications

1. Connecteur électrique (1') pour interconnecter des câbles (30') à conducteurs, dans lequel les câbles sont fixés entre des renfoncements d'un réceptacle (2') généralement en forme de C et un élément de coinçage intérieur (12'), caractérisé par des creux de renforcement (7') se prolongeant autour des périphéries intérieures des renfoncements du réceptacle (2') en forme de C et formant des cannelures (8') dirigées vers l'intérieur et des protubérances (9') dirigées vers l'extérieur, et des dents de retenue (10') disposées sur les périphéries intérieures des renfoncements, entre les creux (7').

2. Connecteur électrique selon la revendication 1, dans lequel les creux (7') se prolongent généralement entièrement à travers le réceptacle (2') en forme de C.

3. Connecteur électrique selon la revendication 1 ou 2, dans lequel le réceptacle (2') en forme de C est constitué de tôle estampée et façonnée.

4. Connecteur électrique selon l'une quelconque des revendications précédentes, dans lequel l'élément de coinçage (12') présente une bosse de verrouillage (17') qui s'ajuste dans une ouverture coopérante (5') dans le réceptacle en forme de C, lorsqu'elle est assemblée avec celui-ci, pour empêcher le déverrouillage de l'élément de coinçage vis-à-vis du réceptacle.
